(19) Europäisches Patentamt
European Patent Office
Office européen des brevets

(11) **EP 3 664 282 B1**

(12) **EUROPÄISCHE PATENTSCHRIFT**

(45) Veröffentlichungstag und Bekanntmachung des Hinweises auf die Patenterteilung:
**25.05.2022 Patentblatt 2022/21**

(21) Anmeldenummer: **18210093.3**

(22) Anmeldetag: **04.12.2018**

(51) Internationale Patentklassifikation (IPC):
*H02P 23/14* (2006.01)   *H02P 6/34* (2016.01)
*H02P 6/10* (2006.01)   *H02P 25/024* (2016.01)
*H02P 25/064* (2016.01)

(52) Gemeinsame Patentklassifikation (CPC):
**H02P 23/14; H02P 6/10; H02P 6/34;**
**H02P 23/0022; H02P 25/024; H02P 25/064;**
H02P 21/20

(54) **KOMPENSIEREN VON RASTMOMENTEN VON SYNCHRONMOTOREN**

COMPENSATION FOR DETENT TORQUE OF SYNCHRONOUS MOTORS

COMPENSATION DES COUPLE DE DÉTENTE DES MOTEURS SYNCHRONES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**10.06.2020 Patentblatt 2020/24**

(73) Patentinhaber: **Siemens Aktiengesellschaft
80333 München (DE)**

(72) Erfinder: **Künzel, Stefan
91056 Erlangen (DE)**

(56) Entgegenhaltungen:
JP-A- 2010 063 343    US-A1- 2003 181 999
US-A1- 2010 156 332    US-A1- 2011 084 636
US-A1- 2013 221 887

**Beschreibung**

Die Erfindung betrifft ein Verfahren und eine Kompensationsanordnung zum Kompensieren von Rastmomenten von Synchronmotoren.

Ein Synchronmotor weist üblicherweise Rastmomente auf, die den Rundlauf des Motors stören und wie Störgrößen in die Regelung von Betriebsparametern des Motors wie einer Drehzahl oder Lage des Läufers eines rotierenden Motors oder einer Geschwindigkeit oder Position des Läufers eines Linearmotors eingreifen. Die Rastmomente von Synchronmotoren hängen normalerweise von Fertigungstoleranzen ab, beispielweise von Fertigungstoleranzen, die die Ausbildung der Luftspalte zwischen den Läufern und Ständern der Motoren beeinflussen. Infolge derartiger Fertigungstoleranzen unterscheiden sich die Rastmomente selbst baugleicher Synchronmotoren in der Regel voneinander. Ferner sind die Rastmomente in der Regel lastabhängig und wachsen beispielsweise mit steigendem Lastmoment eines Motors. Diese Fertigungs- und Lastabhängigkeit der Rastmomente erschwert die Kompensation der Rastmomente im Betrieb von Synchronmotoren.

Die US 2010156332 A1 lehrt ein Kompensationssystem zum Kompensieren eines Rastmoments eines Motors mit einer Geschwindigkeitsmessvorrichtung, einer Trägheitsmomentmessvorrichtung, einem Rotorpositionssensor, einem Prozessor, mehreren Bandpassfiltern und einer Stromsteuervorrichtung. Der Prozessor erhält eine ermittelte Geschwindigkeit, ein Trägheitsmoment und eine Rotorposition des Motors, um das Rastmoment des Motors zu bestimmen. Jeder der Bandpassfilter ist mit einer anderen Frequenz ausgebildet, verschiedene Frequenzen von Wellenformen des Rastmoments zu filtern. Der Prozessor ermittelt eine Fourier-Transformation des Rastmoment gemäß einer Anzahl der Fourier-Koeffizienten des Bandpassfilters, eines Rastmoments an einer voreingestellten Rotorposition und eines Raststroms aus der Fourier-Transformation des Rastmoments. Die Stromsteuervorrichtung gibt nach Ermittlung des Raststroms einen in die entgegengesetzt Stromrichtung des Raststroms wirkenden Strom an den Motor aus, welcher das Rastmoment des Motors kompensiert.

Die US 2003181999 A1 beschreibt eine adaptive Regelung, welche sich wiederholende Geschwindigkeitsschwankungen von rotierenden mechanischen Komponenten, wie Rollen, Gussräder, Riemenscheiben, Zahnräder, Zugwalzen, Extruder, Zahnradpumpen und dergleichen - welche präzise rotieren müssen - ausregelt.

Mit der US 20110084636 A1 wird ein Verfahren zum Reduzieren von Rastmomenteffekten an einer elektrischen Permanentmagnetmaschine offenbart, welches die Durchführung zweier Tests mit verschiedenen Rastkompensationssignalen aufweist. Ein erster Wert wird berechnet, indem eine komplexe Rastamplitude des für einen ersten Test bereitgestellten Kompensationssignals mit einer komplexen Amplitude eines Schwingungssignals multipliziert wird, das sich aus dem Rastmoment des zweiten Tests ergibt. Ein zweiter Wert wird berechnet durch Multiplikation einer komplexen Rastamplitude des Kompensationssignal für den zweiten Test mit einer komplexen Amplitude des Vibrationssignals, das sich aus dem Rastmoment des ersten Tests ergibt. Eine gewünschte komplexe Rastkompensationsamplitude wird berechnet, indem die erste Differenz aus erstem und zweiten Wert geteilt wird durch eine Differenz aus den komplexen Amplituden der Schwingungssignale, welche sich aus dem ersten und dem zweiten Test ergibt. Ein kompensiertes Rastmoment wird, basierend auf der gewünschten komplexen Rastkompensationsamplitude, an die elektrische Maschine angelegt.

Die JP 2010063343 A betrifft eine Motorsteuervorrichtung und ein Verfahren zur Korrektur des Rastmoments an einem elektrischen Motor mittels FFT (Fast Fourier Transformation). Die Motorsteuervorrichtung umfasst einen Abtast-Determinator zum Ausgeben eines Abtastausführungsbefehls an eine Abtasteinheit gemäß einer festgelegten Abtastbedingung und einen Mittelungsprozessor zum Berechnen eines durchschnittlichen Fourier-Koeffizienten aus einer Vielzahl von Fourier-Koeffizienten, ermittelt unter Verwendung des korrigierten Drehmomentbefehls, welcher an mehreren Positionen des Motors abgetastet wird. Ein Korrekturwertrechner berechnet einen Rastmoment-Korrekturwert unter Verwendung des Fourier-Koeffizienten oder des durchschnittlichen Fourier-Koeffizienten, der durch eine festgelegte Wiederholungszahl aktualisiert wird.

In der US 2013221887 A1 wird ein Verfahren und eine Vorrichtung zur Unterdrückung von Welligkeiten beim Betrieb eines bürstenlosen Gleichstrommotors offenbart. Dazu werden Fourier-Koeffizienten der Wellenform eines Statorstrom für den Gleichstrommotor als Funktion der Rotorgeschwindigkeit des Gleichstrommotors unter Berücksichtigung einer finiten Bandbreitendynamik des Antriebs berechnet. Für eine vorgegebene Geschwindigkeit werden die Fourier-Koeffizienten der Reihe, die sich der Wellenform annähert, als Funktion der Rotorgeschwindigkeit und der Verstärkerdynamik berechnet, um eine Wellenform zu erzeugen, die zu keiner Drehmoment- oder Geschwindigkeitspulsation des bürstenlosen Gleichstrommotors führt.

Der Erfindung liegt die Aufgabe zugrunde, ein verbessertes Verfahren zum Kompensieren von Rastmomenten von Synchronmotoren anzugeben.

Die Aufgabe wird erfindungsgemäß durch die Merkmale des Anspruchs 1 gelöst.

Vorteilhafte Ausgestaltungen der Erfindung sind Gegenstand der abhängigen Ansprüche.

Bei dem erfindungsgemäßen Verfahren werden Rastmomente baugleicher Synchronmotoren, die jeweils einen Ständer und einen Läufer aufweisen, kompensiert. Dabei werden für einen Referenzmotor der Synchronmotoren ein Leerlaufrastmoment in einem Leerlauf in Abhängigkeit von einer Läuferstellung des Läufers relativ zu dem Ständer und für verschiedene Arbeitspunkte jeweils ein Lastrastmoment in Abhängigkeit von der Läuferstellung erfasst. Für jedes erfasste Lastrastmoment des Referenzmotors wird ein Differenzrastmoment gebildet, indem das erfasste Leerlaufrastmoment des Referenzmotors von dem Lastrastmoment subtrahiert wird. Ferner wird eine arbeitspunktabhängige Spektralkomponente des Differenzrastmoments bestimmt und es wird eine Modellfunktion der Spektralkomponente gebildet, durch die die Spektralkomponente in Abhängigkeit von dem Arbeitspunkt modelliert wird. Für jeden Synchronmotor wird bei dem Betrieb in einem vorgebbaren ersten Betriebsbereich an einem momentanen Arbeitspunkt einem Sollstrom des Synchronmotors ein erster Kompensationsstrom überlagert, der ein Kompensationsmoment erzeugt, das ein Rastmoment mit dem Wert der Modellfunktion an dem momentanen Arbeitspunkt kompensiert.

Die Erfindung basiert auf der Idee, einen Rastmomentanteil, der für baugleiche Synchronmotoren, das heißt für Synchronmotoren eines bestimmten Motortyps, im Wesentlichen identisch und somit exemplarunabhängig ist, unabhängig von einem exemplarabhängigen Rastmomentanteil des Rastmoments eines Synchronmotors zu kompensieren. Dabei wird zum einen die Erkenntnis verwendet, dass der exemplarabhängige Rastmomentanteil zum überwiegenden Teil bereits im Leerlauf des Synchronmotors als Leerlaufrastmoment auftritt und erfasst werden kann. Ferner wird die Erfahrung ausgenutzt, dass der exemplarunabhängige Rastmomentanteil in der Regel auf eine Spektralkomponente oder wenige Spektralkomponenten eines Spektrums des Rastmoments konzentriert ist.

Die Erfindung sieht daher vor, für einen der Synchronmotoren, der hier als Referenzmotor bezeichnet wird, an verschiedenen Arbeitspunkten jeweils ein Lastrastmoment, das heißt ein Rastmoment des belasteten Referenzmotors, zu erfassen und von diesem das ebenfalls erfasste Leerlaufrastmoment des Referenzmotors abzuziehen. Die durch die Subtraktion des Leerlaufrastmoments von den Lastrastmomenten für die verschiedenen Arbeitspunkte ermittelten Differenzrastmomente sind weitgehend exemplarunabhängig. Des Weiteren sieht die Erfindung vor, eine lastabhängige Spektralkomponente des Differenzrastmoments zu ermitteln und diese für alle Synchronmotoren des betreffenden Motortyps in gleicher Weise zu kompensieren. Um die Spektralkomponente zu kompensieren, wird die Spektralkomponente erfindungsgemäß durch eine Modellfunktion in Abhängigkeit von dem Arbeitspunkt modelliert, um die für einzelne Arbeitspunkte ermittelten Werte der Spektralkomponente auf alle Arbeitspunkte zu erweitern. Der Wert der Modellfunktion an einem momentanen Arbeitpunkt wird dann durch einen Kompensationsstrom kompensiert, der ein Kompensationsmoment erzeugt, das dem Wert der Modellfunktion entgegengesetzt gleich ist.

Falls das Spektrum des Differenzrastmoments mehrere lastabhängige Spektralkomponenten aufweist, die wesentliche Beiträge zu dem Rastmoment liefern, werden diese Spektralkomponenten entsprechend jeweils durch eine Modellfunktion modelliert und durch einen Kompensationsstrom kompensiert.

Dass die Kompensation einer Spektralkomponente nur in einem bestimmten Betriebsbereich vorgenommen wird, berücksichtigt, dass ein Synchronmotor Spannungsoberwellen erzeugt, die als Störgrößen auf die Stromregelung einwirken und bei steigender Läuferdrehzahl beziehungsweise Läufergeschwindigkeit verhindern, dass der Strom amplituden- und phasenrichtig eingestellt wird. Außerdem wirken sich Rastmomente bei hohen Läuferdrehzahlen beziehungsweise Läufergeschwindigkeiten aufgrund der Trägheit des Läufers in der Regel weniger kritisch auf den Betrieb eines Synchronmotors aus als bei kleinen Läuferdrehzahlen beziehungsweise Läufergeschwindigkeiten, so dass die Nützlichkeit einer Kompensation der Rastmomente mit steigenden Läuferdrehzahlen beziehungsweise Läufergeschwindigkeiten abnimmt. Der erste Betriebsbereich, in dem eine Spektralkomponente des Differenzrastmoments kompensiert wird, wird daher vorzugsweise im Falle rotierender Synchronmotoren durch ein Drehzahlintervall für Läuferdrehzahlen und im Falle linearer Synchronmotoren durch ein Geschwindigkeitsintervall für Läufergeschwindigkeiten definiert.

Die Erfindung ermöglicht somit eine für einen Motortyp einheitliche, exemplarunabhängige Kompensation lastabhängiger Anteile des Rastmoments, die die aufwändige Ermittlung lastabhängiger Rastmomente nur für einen Referenzmotor des Motortyps erfordert. Die Erfindung reduziert damit insbesondere deutlich den Aufwand und die Kosten einer Kompensation lastabhängiger Rastmomente gegenüber einer Kompensation, bei der lastabhängige Rastmomente für jeden Synchronmotor des betreffenden Motortyps separat erfasst und kompensiert werden.

Ausgestaltungen der Erfindung sehen vor, dass ein Arbeitspunkt eines Synchronmotors durch einen Istwert eines Lastmoments oder durch einen Istwert eines Lastmoments und wenigstens einen weiteren Parameter definiert wird. Diese Ausgestaltungen der Erfindung berücksichtigen, dass arbeitspunktabhängige Rastmomentanteile eines Synchronmotors vornehmlich von dem Lastmoment abhängen, wobei unter dem Lastmoment im Falle eines rotierenden Synchronmotors ein unter Last aufzubringendes Drehmoment und im Falle eines Linearmotors eine unter Last aufzubringende Kraft verstanden wird. Nur in Sonderfällen haben auch andere Parameter einen relevanten Einfluss auf die Rastmomente. Ein derartiger Parameter kann beispielsweise die Temperatur sein, wenn der Synchronmotor bei stark schwankender Temperatur betrieben wird.

Weitere Ausgestaltungen der Erfindung sehen vor, dass die Modellfunktion eine Amplitude der Spektralkomponente durch eine polynomiale Funktion eines Lastmoments modelliert, und/oder dass die Modellfunktion eine Phase der Spektralkomponente durch eine stückweise lineare Funktion eines Lastmoments modelliert. Diese Ausgestaltungen der Erfindung berücksichtigen, dass die Amplitude und Phase einer Spektralkomponente des Differenzrastmoment insbesondere bei hohen Beträgen des Lastmoments häufig in guter Näherung polynomial (im Fall der Amplitude) beziehungsweise linear (im Fall der Phase) von dem Lastmoment abhängen, wobei sich die lineare Abhängigkeit der Phase von dem Lastmoment für positive und negative Werte des Lastmoments voneinander unterscheiden kann. Für kleine Beträge des Lastmoments können die Amplitude und/oder die Phase zwar von dem polynomialen beziehungsweise linearen Verhalten abweichen, jedoch sind derartige Abweichungen der Modellfunktion von dem tatsächlichen Verlauf der Amplitude und/oder Phase in der Regel tolerierbar, da das Differenzrastmoment für kleine Beträge des Lastmoments nur gering ist.

Eine weitere Ausgestaltung der Erfindung sieht vor, dass für jeden Synchronmotor in einem Leerlauf ein Leerlaufrastmoment in Abhängigkeit von der Läuferstellung erfasst wird und bei dem Betrieb des Synchronmotors in einem vorgebbaren zweiten Betriebsbereich dem Sollstrom des Synchronmotors ein zweiter Kompensationsstrom überlagert wird, der ein Kompensationsmoment erzeugt, das das Leerlaufrastmoment des Synchronmotors kompensiert. Wie der erste Betriebsbereich wird auch der zweite Betriebsbereich vorzugsweise im Falle rotierender Synchronmotoren durch ein Drehzahlintervall für Läuferdrehzahlen und im Falle linearer Synchronmotoren durch ein Geschwindigkeitsintervall für Läufergeschwindigkeiten definiert. Beispielsweise enthält der zweite Betriebsbereich den ersten Betriebsbereich.

Gemäß der vorgenannten Ausgestaltung der Erfindung wird ein Leerlaufrastmoment für jeden Synchronmotor des betreffenden Motortyps separat erfasst und kompensiert. Diese Ausgestaltung der Erfindung berücksichtigt, dass sich die Leerlaufrastmomente baugleicher Synchronmotoren in der Regel aufgrund von Fertigungstoleranzen voneinander unterscheiden und daher nicht examplarunabhängig kompensiert werden können. Eine Erfassung des Leerlaufrastmoments eines Synchronmotors ist jedoch wesentlich weniger aufwändig als die Erfassung lastabhängiger Lastrastmomente für verschiedene Arbeitspunkte und erfordert insbesondere keinen Prüfstand. Die Erfindung sieht demgemäß eine exemplarabhängige Kompensation des Leerlaufrastmoments der Synchronmotoren eines bestimmten Motortyps, aber eine exemplarunabhängige Kompensation lastabhängiger Anteile des Rastmoments vor.

Eine Spektralkomponente des Differenzrastmoments ist beispielsweise im Falle rotierender Synchronmotoren eine Fourierkomponente des Differenzrastmoments als Funktion eines Läuferwinkels einer Drehung des Läufers relativ zum Ständer und im Falle linearer Synchronmotoren eine Fourierkomponente des Differenzrastmoments als Funktion einer Läuferposition des Läufers relativ zum Ständer.

Eine weitere Ausgestaltung der Erfindung sieht vor, dass bei jeder Kompensation eines Rastmoments eines Synchronmotors, das heißt sowohl bei der Kompensation einer Spektralkomponente des Differenzrastmoments als auch bei der Kompensation des Leerlaufrastmoments, eine Totzeit der Regelung des Synchronmotors berücksichtigt wird, die zwischen der Änderung des jeweiligen Kompensationsstroms und der durch die Änderung des Kompensationsstroms bewirkten Änderung des Kompensationsmoments vergeht. Es wird dabei jeweils ein Kompensationsstrom zur Kompensation eines Rastmoments erzeugt, das zu einem um die Totzeit verschobenen Zeitpunkt nach der Erzeugung des Kompensationsstroms wirkt. Dadurch wird vorteilhaft die endliche Regelungszeit der Regelung eines Synchronmotors bei der Kompensation der Rastmomente berücksichtigt.

Eine erfindungsgemäße Kompensationsanordnung zur Durchführung des erfindungsgemäßen Verfahrens umfasst eine Messvorrichtung zum Erfassen des Leerlaufrastmoments und der Lastrastmomente des Referenzmotors in Abhängigkeit von der Läuferstellung und eine Auswerteeinheit zum Bilden des Differenzrastmoments, Bestimmen der arbeitspunktabhängigen Spektralkomponente des Differenzrastmoments und Bilden der Modellfunktion der Spektralkomponente. Ferner umfasst die Kompensationsanordnung für jeden Synchronmotor eine Steuereinheit zum Regeln eines Motorstroms des Synchronmotors, wobei die Steuereinheit dazu ausgebildet ist, bei dem Betrieb des Synchronmotors in dem ersten Betriebsbereich an einem momentanen Arbeitspunkt einem Sollstrom des Synchronmotors einen ersten Kompensationsstrom zu überlagern, der ein Kompensationsmoment erzeugt, das ein Rastmoment mit dem Wert der Modellfunktion an dem momentanen Arbeitspunkt kompensiert.

Eine erfindungsgemäße Kompensationsanordnung ermöglicht die Durchführung des erfindungsgemäßen Verfahrens. Daher entsprechen die Vorteile einer erfindungsgemäßen Kompensationsanordnung den oben bereits genannten Vorteilen des erfindungsgemäßen Verfahrens.

Eine Ausgestaltung der erfindungsgemäßen Kompensationsanordnung sieht vor, dass die Steuereinheit jedes Synchronmotors dazu ausgebildet ist, ein für den Synchronmotor in Abhängigkeit von dessen Läuferstellung erfasstes Leerlaufrastmoment zu speichern und bei dem Betrieb des Synchronmotors in einem vorgebbaren zweiten Betriebsbereich dem Sollstrom des Synchronmotors einen zweiten Kompensationsstrom zu überlagern, der ein Kompensationsmoment erzeugt, das das Leerlaufrastmoment des Synchronmotors kompensiert. Dies ermöglicht die oben bereits genannte vorteilhafte exemplarabhängige Kompensation des Leerlaufrastmoments separat für jeden Synchronmotor des betreffenden Motortyps.

Die oben beschriebenen Eigenschaften und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1    schematisch elektrische Synchronmotoren und eine Kompensationsanordnung zum Kompensieren von Rastmomenten der Synchronmotoren,

FIG 2    Amplituden von Spektralkomponenten eines Rastmoments eines Synchronmotors in Abhängigkeit von einem Lastmoment,

FIG 3    eine Amplitude einer Spektralkomponente eines Rastmoments eines Synchronmotors in Abhängigkeit von einem Lastmoment,

FIG 4    eine Phase einer Spektralkomponente eines Rastmoments eines Synchronmotors in Abhängigkeit von einem Lastmoment,

FIG 5    eine Amplitude einer Spektralkomponente eines Differenzrastmoments eines Synchronmotors in Abhängigkeit von einem Lastmoment,

FIG 6    eine Phase einer Spektralkomponente eines Differenzrastmoments eines Synchronmotors in Abhängigkeit von einem Lastmoment,

FIG 7    Amplituden einer Spektralkomponente eines Rastmoments eines Synchronmotors in Abhängigkeit von ei ner Drehzahl des Synchronmotors.

Einander entsprechende Teile sind in den Figuren mit denselben Bezugszeichen versehen.

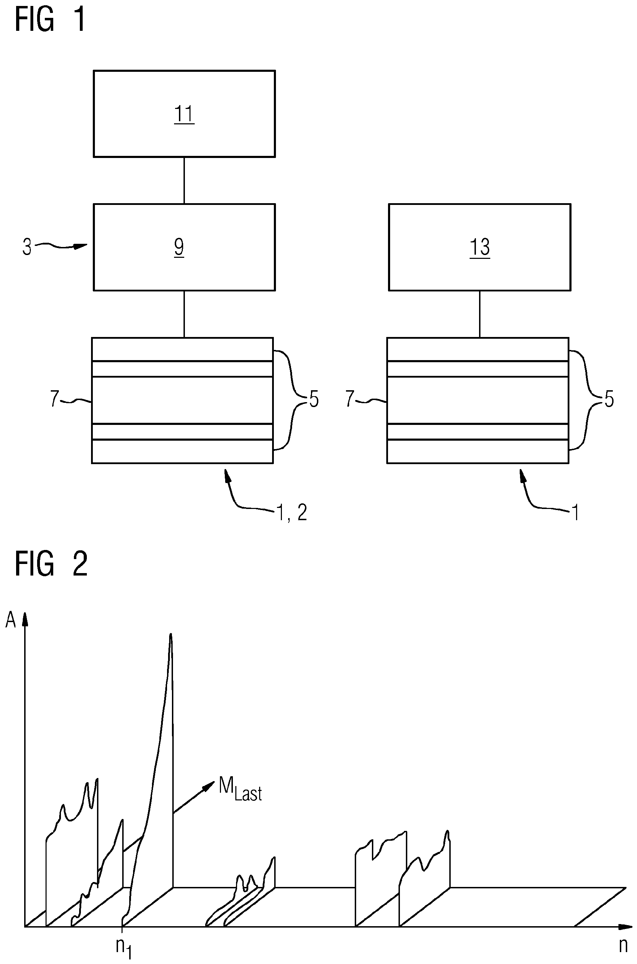

Figur 1 zeigt schematisch zwei baugleiche Synchronmotoren 1 und eine Kompensationsanordnung 3 zum Kompensieren von Rastmomenten der Synchronmotoren 1.

Die Synchronmotoren 1 sind jeweils als eine permanenterregte rotierende elektrische Maschine oder als ein permanenterregter Linearmotor mit einem Ständer 5 und einem relativ zu dem Ständer 5 bewegbaren Läufer 7 ausgebildet. Beispielsweise weist der Läufer 7 Permanentmagneten auf und der Ständer 5 weist ein Blechpaket mit Nuten auf, durch die eine Ständerwicklung geführt ist. Alternativ weist der Ständer 5 Permanentmagneten auf und der Läufer 7 weist ein Blechpaket mit Nuten auf, durch die eine Läuferwicklung geführt ist.

Die Kompensationsanordnung 3 weist eine Messvorrichtung 9, eine Auswerteeinheit 11 und für jeden Synchronmotor 1 eine Steuereinheit 13 auf.

Mit der Messvorrichtung 9 werden für einen Referenzmotor 2 der Synchronmotoren 1 ein Leerlaufrastmoment in einem Leerlauf in Abhängigkeit von einer Läuferstellung des Läufers 7 relativ zu dem Ständer 5 und für verschiedene Arbeitspunkte jeweils ein Lastrastmoment in Abhängigkeit von der Läuferstellung erfasst.

Ein Arbeitspunkt eines Synchronmotors 1 wird dabei durch einen Istwert eines Lastmoments $M_{Last}$ des Synchronmotors 1 definiert. Alternativ kann ein Arbeitspunkt eines Synchronmotors 1 durch einen Istwert des Lastmoments $M_{Last}$ und wenigstens einen weiteren Parameter, beispielsweise eine Temperatur, definiert werden.

Mit der Auswerteeinheit 11 wird für jedes erfasste Lastrastmoment des Referenzmotors 2 ein Differenzrastmoment gebildet, indem das erfasste Leerlaufrastmoment des Referenzmotors 2 von dem Lastrastmoment subtrahiert wird. Ferner wird mit der Auswerteeinheit 11 eine arbeitspunktabhängige Spektralkomponente des Differenzrastmoments bestimmt und eine Modellfunktion der Spektralkomponente gebildet, durch die die Spektralkomponente in Abhängigkeit von dem Arbeitspunkt modelliert wird.

Die Spektralkomponente des Differenzrastmoments ist im Falle rotierender Synchronmotoren 1 eine Fourierkomponente des Differenzrastmoments als Funktion eines Läuferwinkels einer Drehung des Läufers 7 relativ zum Ständer 5 und im Falle linearer Synchronmotoren 1 eine Fourierkomponente des Differenzrastmoments als Funktion einer Läuferposition des Läufers 7 relativ zum Ständer 5.

Wenn ein Arbeitspunkt durch einen Istwert des Lastmoments $M_{Last}$ definiert wird und die Synchronmotoren 1 rotierende elektrische Maschinen sind, wird eine Modellfunktion $M_{Rast}(M_{Last})$ für eine Spektralkomponente des Differenzrastmoments als Funktion des Lastmoments $M_{Last}$ beispielsweise folgendermaßen gebildet:

$$M_{Rast}(M_{Last}) = amp(M_{Last}) \cdot \sin\big(n_1 \cdot \varphi + phase(M_{Last})\big),$$

wobei $\varphi$ der Läuferwinkel ist, $amp(M_{Last})$ eine Amplitude $A_{Diff}$ der Spektralkomponente des Differenzrastmoments als Funktion des Lastmoments $M_{Last}$ modelliert, $phase(M_{Last})$ eine Phase $P_{Diff}$ der Spektralkomponente des Differenzrastmoments als Funktion des Lastmoments $M_{Last}$ modelliert und $n_1$ eine die Spektralkomponente charakterisierende Vielfachheit ist. $amp(M_{Last})$ ist beispielsweise eine polynomiale Funktion, z. B. eine quadratische Funktion gemäß

$$amp(M_{Last}) = k_1 \cdot M_{Last}^2 + k_0 \cdot |M_{Last}|,$$

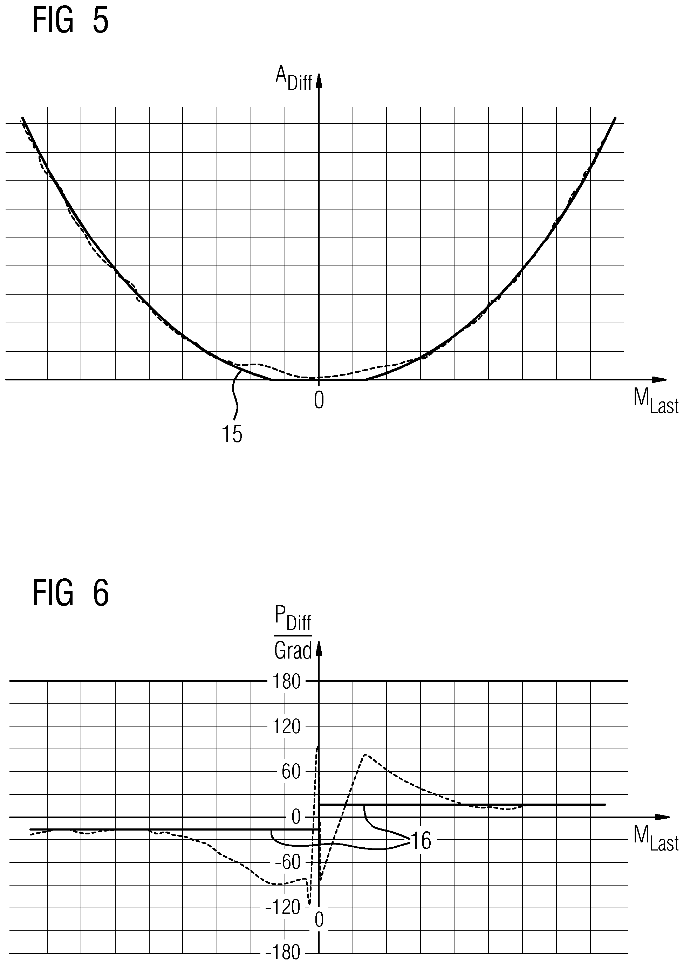

wobei $k_1$ und $k_0$ geeignet zu bestimmende Konstante sind. **phase**($M_{Last}$) ist beispielsweise eine stückweise lineare Funktion, siehe dazu Figur 6.

Statt die Modellfunktion wie oben in Abhängigkeit von dem Lastmoment $M_{Last}$ zu bilden, kann sie alternativ beispielsweise auch in Abhängigkeit von einem drehmomentbildenden Strom des Synchronmotors 1 gebildet werden, da zwischen dem drehmomentbildenden Strom und dem Lastmoment $M_{Last}$ eine eindeutige (häufig in guter Näherung lineare) Abhängigkeit besteht.

Falls die Synchronmotoren 1 Linearmotoren sind, wird eine Modellfunktion $M_{Rast}(M_{Last})$ für eine Spektralkomponente des Differenzrastmoments entsprechend gebildet, wobei an die Stelle des Läuferwinkels $\varphi$ eine Ortsvariable tritt, die die Position des Läufers 7 relativ zum Ständer 5 angibt, und an die Stelle der Vielfachheit $n_1$ eine die Spektralkomponente charakterisierende Wellenzahl tritt.

Mit einer Steuereinheit 13 wird ein Motorstrom eines Synchronmotors 1 geregelt. Jede Steuereinheit 13 ist insbesondere dazu ausgebildet, bei dem Betrieb des Synchronmotors 1 in einem vorgebbaren ersten Betriebsbereich an einem momentanen Arbeitspunkt einem Sollstrom des Synchronmotors 1 einen ersten Kompensationsstrom zu überlagern, der ein Kompensationsmoment erzeugt, das ein Rastmoment mit dem Wert der Modellfunktion an dem momentanen Arbeitspunkt kompensiert.

Ferner wird mit einer Steuereinheit 13 bei dem Betrieb des jeweiligen Synchronmotors 1 in einem vorgebbaren zweiten Betriebsbereich dem Sollstrom des Synchronmotors 1 ein zweiter Kompensationsstrom überlagert, der ein Kompensationsmoment erzeugt, das das Leerlaufrastmoment des Synchronmotors 1 kompensiert. Dazu wird für den Synchronmotor 1 in einem Leerlauf dessen Leerlaufrastmoment in Abhängigkeit von der Läuferstellung erfasst und das erfasste Leerlaufrastmoment wird von der Steuereinheit 13 gespeichert.

Ein Betriebsbereich eines Synchronmotors 1 wird im Falle rotierender Synchronmotoren 1 durch ein Drehzahlintervall für Läuferdrehzahlen $\nu$ und im Falle linearer Synchronmotoren 1 durch ein Geschwindigkeitsintervall für Läufergeschwindigkeiten definiert. Im Falle rotierender Synchronmotoren 1 ist der erste Betriebsbereich beispielsweise ein erstes Drehzahlintervall, dessen untere Intervallgrenze die Drehzahl Null ist und dessen obere Intervallgrenze ein vorgebbarer erster Drehzahlschwellenwert $\nu_s$ ist, und der zweite Betriebsbereich ist beispielsweise ein zweites Drehzahlintervall, dessen untere Intervallgrenze die Drehzahl Null ist und dessen obere Intervallgrenze ein vorgebbarer zweiter Drehzahlschwellenwert ist. Entsprechend ist im Falle linearer Synchronmotoren 1 der erste Betriebsbereich beispielsweise ein erstes Geschwindigkeitsintervall, dessen untere Intervallgrenze die Geschwindigkeit Null ist und dessen obere Intervallgrenze ein vorgebbarer erster Geschwindigkeitsschwellenwert ist, und der zweite Betriebsbereich ist beispielsweise ein zweites Geschwindigkeitsintervall, dessen untere Intervallgrenze die Geschwindigkeit Null ist und dessen obere Intervallgrenze ein vorgebbarer zweiter Geschwindigkeitsschwellenwert ist.

Sowohl bei der Kompensation einer Spektralkomponente des Differenzrastmoments als auch bei der Kompensation des Leerlaufrastmoments eines Synchronmotors 1 wird eine Totzeit der Regelung des Synchronmotors 1 berücksichtigt, die zwischen der Änderung eines Kompensationsstroms und der durch die Änderung des Kompensationsstroms bewirkten Änderung des Kompensationsmoments vergeht. Dazu wird jeweils ein Kompensationsstrom zur Kompensation eines Rastmoments erzeugt, das zu einem um die Totzeit verschobenen Zeitpunkt nach der Erzeugung des Kompensationsstroms wirkt. Beispielsweise wird im Falle eines rotierenden Synchronmotors 1 zur Kompensation eines Rastmoments jeweils ein momentaner Läuferwinkel $\varphi$ unter Berücksichtigung der momentanen Läuferdrehzahl $\nu$ auf einen Wert extrapoliert, den der Läuferwinkel $\varphi$ zu einem um die Totzeit verschobenen Zeitpunkt annimmt. Entsprechend wird im Falle eines Linearmotors 1 jeweils eine momentane Läuferposition unter Berücksichtigung der momentanen Läufergeschwindigkeit auf einen Wert extrapoliert, den die Läuferposition zu einem um die Totzeit verschobenen Zeitpunkt annimmt.

Figur 2 zeigt exemplarisch Amplituden A von durch jeweils eine Vielfachheit n charakterisierten Spektralkomponenten eines erfassten Lastrastmoments eines rotierenden Synchronmotors 1 in Abhängigkeit von dem Lastmoment $M_{Last}$. Figur 2 zeigt einen typischen Fall, in dem lastabhängige Rastmomentanteile auf eine Spektralkomponente mit einer spezifischen Vielfachheit $n_1$ konzentriert sind, während die anderen Spektralkomponenten jeweils relativ wenig von dem Lastmoment $M_{Last}$ beziehungsweise dem Arbeitspunkt des Referenzmotors 2 abhängen und/oder deutlich kleinere lastabhängige Rastmomentanteile aufweisen. Erfindungsgemäß wird in einem solchen Fall nur für die Spektralkomponente mit der Vielfachheit $n_1$ die dazu korrespondierende Spektralkomponente des Differenzrastmoments (nämlich diejenige mit der Vielfachheit $n_1$) bestimmt und kompensiert. Häufig dominiert beispielsweise die

Spektralkomponente mit der Vielfachheit $n_1=6p$ der sechsfachen Polpaarzahl p des Synchronmotors 1 die Lastabhängigkeit des Rastmoments. Wenn das Spektrum des Rastmoments mehrere relevante lastabhängige Spektralkomponenten aufweist, wird für jede dieser Spektralkomponenten die dazu korrespondierende Spektralkomponente des Differenzrastmoments bestimmt, modelliert und kompensiert.

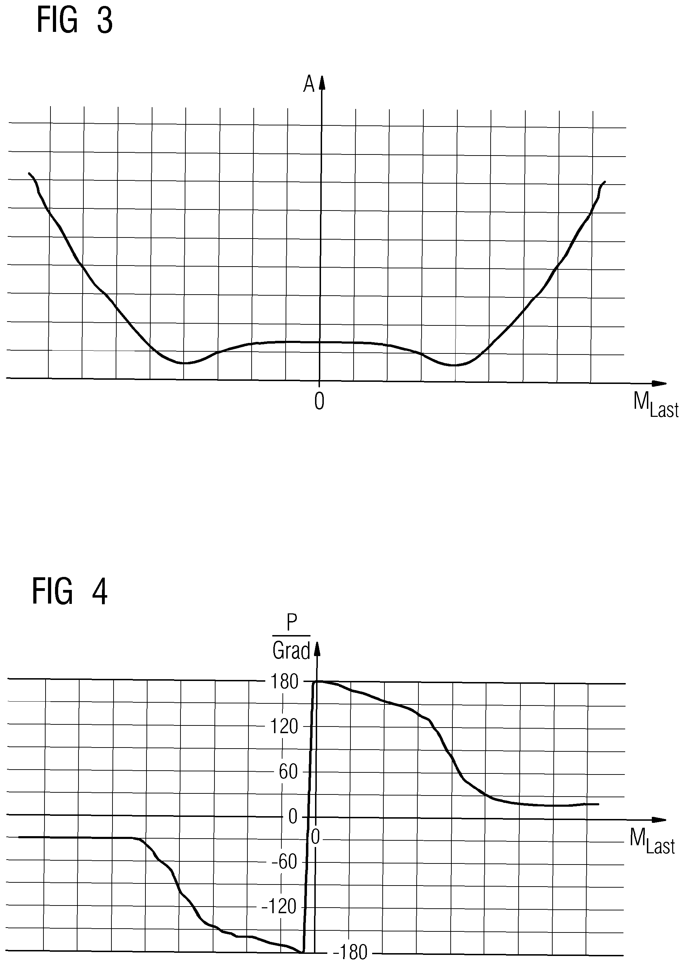

Die Figuren 3 und 4 zeigen die Amplitude A und die Phase P einer lastabhängigen Spektralkomponente eines Rastmoments eines Synchronmotors 1 in Abhängigkeit von dem Lastmoment $M_{Last}$.

Die Figuren 5 und 6 zeigen die Amplitude $A_{Diff}$ und die Phase $P_{Diff}$ der Spektralkomponente des Differenzrastmoments, die zu der Spektralkomponente korrespondiert, deren Amplitude A und Phase P in den Figuren 3 und 4 gezeigt sind, jeweils in Abhängigkeit von dem Lastmoment $M_{Last}$. Ferner zeigt Figur 5 den Graphen 15 einer quadratischen Funktion $amp(M_{Last})$, die die Amplitude $A_{Diff}$ modelliert, und Figur 6 zeigt den Graphen 16 einer stückweise linearen Funktion $phase(M_{Last})$, die die Phase $P_{Diff}$ modelliert. In dem in Figur 6 gezeigten Beispiel ist die Funktion $phase(M_{Last})$ für positive und negative Werte des Lastmoments $M_{Last}$ jeweils konstant, wobei sich die Werte der Konstanten für positive und negative Werte des Lastmoments $M_{Last}$ voneinander unterscheiden und dem jeweiligen Wert der Phase $P_{Diff}$ der Spektralkomponente des Differenzrastmoments für hohe Beträge des Lastmoments $M_{Last}$ entsprechen. Für kleine Beträge des Lastmoments $M_{Last}$ weicht die Funktion $phase(M_{Last})$ damit zwar von dem tatsächlichen Wert der Phase $P_{Diff}$ ab, jedoch ist diese Abweichung in der Regel tolerierbar, da das Differenzrastmoment für kleine Beträge des Lastmoments $M_{Last}$ gering ist. Wenn die Phase $P_{Diff}$ für hohe Beträge des Lastmoments $M_{Last}$ keine konstante Funktion, sondern beispielsweise für positive und negative Werte des Lastmoments $M_{Last}$ jeweils näherungsweise eine lineare Funktion mit einer nicht verschwindenden Steigung ist, dann wird die Funktion $phase(M_{Last})$ beispielsweise für positive und negative Werte des Lastmoments $M_{Last}$ durch die jeweilige lineare Funktion definiert.

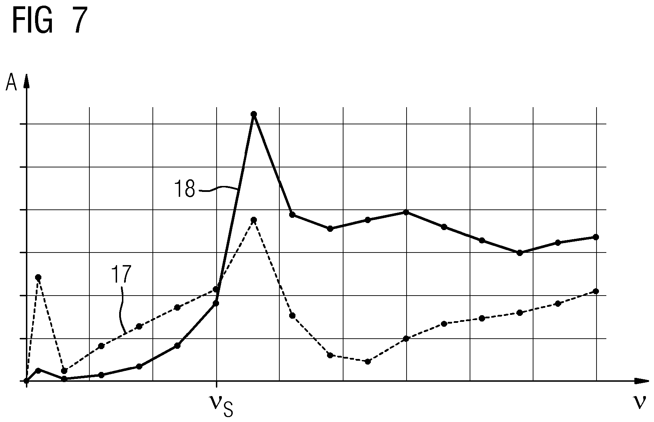

Figur 7 zeigt Amplituden A einer lastabhängigen Spektralkomponente eines Rastmoments eines rotierenden Synchronmotors 1 in Abhängigkeit von einer Läuferdrehzahl ν des Synchronmotors 1 an einem festen Arbeitspunkt des Synchronmotors 1. Dabei zeigt ein erster Graph 17 die Amplitude A ohne eine Kompensation der Spektralkomponente des Differenzrastmoments und ein zweiter Graph 18 zeigt die Amplitude A mit einer Kompensation der Spektralkomponente des Differenzrastmoments. Figur 7 zeigt, dass die Kompensation der Spektralkomponente des Differenzrastmoments oberhalb eines ersten Drehzahlschwellwerts $ν_s$ zu einer größeren Amplitude A führt als ein Betrieb des Synchronmotors 1 ohne Kompensation der Spektralkomponente des Differenzrastmoments. Dies spiegelt wider, dass der Synchronmotor 1 Spannungsoberwellen erzeugt, die als Störgrößen auf die Stromregelung einwirken und bei steigender Läuferdrehzahl ν verhindern, dass der drehmomentbildende Strom amplituden- und phasenrichtig eingestellt wird. Daher wird die Kompensation einer Spektralkomponente des Differenzrastmoments bei Läuferdrehzahlen ν vorzugsweise oberhalb des ersten Drehzahlschwellwerts $ν_s$ abgeschaltet. Die Kompensation des Leerlaufrastmoments wird bei Läuferdrehzahlen ν oberhalb eines zweiten Drehzahlschwellwerts abgeschaltet. Dabei ist der zweite Drehzahlschwellwert in der Regel größer als der erste Drehzahlschwellwert $ν_s$, das heißt die Kompensation des Leerlaufrastmoments wird später (bei höheren Läuferdrehzahlen ν) abgeschaltet als die Kompensation der Spektralkomponente des Differenzrastmoments.

Obwohl die Erfindung im Detail durch bevorzugte Ausführungsbeispiele näher illustriert und beschrieben wurde, so ist die Erfindung nicht durch die offenbarten Beispiele eingeschränkt. Der Schutzumfang der Erfindung ist durch die Ansprüche definiert.

**Patentansprüche**

1. Verfahren zum Kompensieren von Rastmomenten baugleicher Synchronmotoren (1), die jeweils einen Ständer (5) und einen Läufer (7) aufweisen, wobei

- für einen Referenzmotor (2) der Synchronmotoren (1) ein Leerlaufrastmoment in einem Leerlauf in Abhängigkeit von einer Läuferstellung des Läufers (7) relativ zu dem Ständer (5) und für verschiedene Arbeitspunkte jeweils ein Lastrastmoment in Abhängigkeit von der Läuferstellung erfasst werden,
- für jedes erfasste Lastrastmoment des Referenzmotors (2) ein Differenzrastmoment gebildet wird, indem das erfasste Leerlaufrastmoment des Referenzmotors (2) von dem Lastrastmoment subtrahiert wird,
- eine arbeitspunktabhängige Spektralkomponente des Differenzrastmoments bestimmt wird,
- eine Modellfunktion der Spektralkomponente gebildet wird, durch die die Spektralkomponente in Abhängigkeit von dem Arbeitspunkt modelliert wird, und
- für jeden Synchronmotor (1) bei dem Betrieb in einem vorgebbaren ersten Betriebsbereich an einem momentanen Arbeitspunkt einem Sollstrom des Synchronmotors (1) ein erster Kompensationsstrom überlagert wird, der ein Kompensationsmoment erzeugt, das ein Rastmoment mit dem Wert der Modellfunktion an dem momentanen Arbeitspunkt kompensiert.

2. Verfahren nach Anspruch 1, wobei ein Arbeitspunkt eines Synchronmotors (1) durch einen Istwert eines Lastmoments ($M_{Last}$) definiert wird.

3. Verfahren nach Anspruch 1, wobei ein Arbeitspunkt eines Synchronmotors (1) durch einen Istwert eines Lastmoments ($M_{Last}$) und wenigstens einen weiteren Parameter definiert wird.

4. Verfahren nach einem der vorhergehenden Ansprüche, wobei die Modellfunktion eine Amplitude ($A_{Diff}$) der Spektralkomponente des Differenzrastmoments durch eine polynomiale Funktion eines Lastmoments ($M_{Last}$) modelliert.

5. Verfahren nach einem der vorhergehenden Ansprüche, wobei die Modellfunktion eine Phase ($P_{Diff}$) der Spektralkomponente des Differenzrastmoments durch eine stückweise lineare Funktion eines Lastmoments ($M_{Last}$) modelliert.

6. Verfahren nach einem der vorhergehenden Ansprüche, wobei für jeden Synchronmotor (1) in einem Leerlauf ein Leerlaufrastmoment in Abhängigkeit von der Läuferstellung erfasst wird und bei dem Betrieb des Synchronmotors (1) in einem vorgebbaren zweiten Betriebsbereich dem Sollstrom des Synchronmotors (1) ein zweiter Kompensationsstrom überlagert wird, der ein Kompensationsmoment erzeugt, das das Leerlaufrastmoment des Synchronmotors (1) kompensiert.

7. Verfahren nach Anspruch 6, wobei der erste Betriebsbereich in dem zweiten Betriebsbereich enthalten ist.

8. Verfahren nach einem der vorhergehenden Ansprüche, wobei ein Betriebsbereich eines Synchronmotors (1) im Falle rotierender Synchronmotoren (1) durch ein Drehzahlintervall für Läuferdrehzahlen (v) und im Falle linearer Synchronmotoren (1) durch ein Geschwindigkeitsintervall für Läufergeschwindigkeiten definiert wird.

9. Verfahren nach einem der vorhergehenden Ansprüche, wobei eine Spektralkomponente des Differenzrastmoments im Falle rotierender Synchronmotoren (1) eine Fourierkomponente des Differenzrastmoments als Funktion eines Läuferwinkels einer Drehung des Läufers (7) relativ zum Ständer (5) und im Falle linearer Synchronmotoren (1) eine Fourierkomponente des Differenzrastmoments als Funktion einer Läuferposition des Läufers (7) relativ zum Ständer (5) ist.

10. Verfahren nach einem der vorhergehenden Ansprüche, wobei jeweils ein Kompensationsstrom zur Kompensation eines Rastmoments erzeugt wird, das zu einem um eine Totzeit verschobenen Zeitpunkt nach der Erzeugung des Kompensationsstroms wirkt, wobei die Totzeit ein Zeitraum ist, der zwischen der Änderung eines Kompensationsstroms und der durch die Änderung des Kompensationsstroms bewirkten Änderung des Kompensationsmoments vergeht.

11. Kompensationsanordnung (3) zur Durchführung des Verfahrens nach einem der vorhergehenden Ansprüche, die Kompensationsanordnung (3) umfassend

   - eine Messvorrichtung (9) zum Erfassen des Leerlaufrastmoments und der Lastrastmomente des Referenzmotors (2) in Abhängigkeit von der Läuferstellung,
   - eine Auswerteeinheit (11) zum Bilden des Differenzrastmoments, Bestimmen der arbeitspunktabhängigen Spektralkomponente des Differenzrastmoments und Bilden der Modellfunktion der Spektralkomponente und
   - für jeden Synchronmotor (1) eine Steuereinheit (13) zum Regeln eines Motorstroms des Synchronmotors (1), wobei die Steuereinheit (13) dazu ausgebildet ist, bei dem Betrieb des Synchronmotors (1) in dem ersten Betriebsbereich an einem momentanen Arbeitspunkt einem Sollstrom des Synchronmotors (1) einen ersten Kompensationsstrom zu überlagern, der ein Kompensationsmoment erzeugt, das ein Rastmoment mit dem Wert der Modellfunktion an dem momentanen Arbeitspunkt kompensiert.

12. Kompensationsanordnung (3) nach Anspruch 11, wobei die Steuereinheit (13) jedes Synchronmotors (1) dazu ausgebildet ist, ein für den Synchronmotor (1) in Abhängigkeit von dessen Läuferstellung erfasstes Leerlaufrastmoment zu speichern und bei dem Betrieb des Synchronmotors (1) in einem vorgebbaren zweiten Betriebsbereich dem Sollstrom des Synchronmotors (1) einen zweiten Kompensationsstrom zu überlagern, der ein Kompensationsmoment erzeugt, das das Leerlaufrastmoment des Synchronmotors (1) kompensiert.

**Claims**

1. Method for the compensation of detent torques of synchronous motors (1) of the same construction, which have a stator (5) and a rotor (7) in each case, wherein

   - for a reference motor (2) of the synchronous motors (1), a no-load detent torque during no-load operation is acquired as a function of a rotor position of the rotor (7) in relation to the stator (5) and, for various operating points, a load detent torque is acquired as a function of the rotor position in each case,
   - for each acquired load detent torque of the reference motor (2), a differential detent torque is established by the acquired no-load detent torque of the reference motor (2) being subtracted from the load detent torque,

- an operating-point-dependent spectral component of the differential detent torque is determined,
- a model function of the spectral component is established, by way of which the spectral component is modelled as a function of the operating point, and
- for each synchronous motor (1), during operation in a predeterminable first operating range, at an instantaneous operating point a setpoint current of the synchronous motor (1) is superimposed by a first compensation current, which generates a compensation torque which compensates for a detent torque with the value of the model function at the instantaneous operating point.

2. Method according to claim 1, wherein an operating point of a synchronous motor (1) is defined by an actual value of a load torque ($M_{load}$).

3. Method according to claim 1, wherein an operating point of a synchronous motor (1) is defined by an actual value of a load torque ($M_{load}$) and at least one further parameter.

4. Method according to one of the preceding claims, wherein the model function models an amplitude ($A_{diff}$) of the spectral component of the differential detent torque by way of a polynomial function of a load torque ($M_{load}$).

5. Method according to one of the preceding claims, wherein the model function models a phase ($P_{diff}$) of the spectral component of the differential detent torque by way of a piecewise linear function of a load torque ($M_{load}$).

6. Method according to one of the preceding claims, wherein a no-load detent torque is acquired in a no-load operation for each synchronous motor (1) as a function of the rotor position and, during operation of the synchronous motor (1) in a predeterminable second operating range, the setpoint current of the synchronous motor (1) is superimposed by a second compensation current, which generates a compensation torque which compensates for the no-load detent torque of the synchronous motor (1).

7. Method according to claim 6, wherein the first operating range is contained within the second operating range.

8. Method according to one of the preceding claims, wherein an operating range of a synchronous motor (1) is defined by a rotational speed interval for rotor rotational speeds (v) in the case of rotating synchronous motors (1) and by a velocity interval for rotor velocities in the case of linear synchronous motors (1).

9. Method according to one of the preceding claims, wherein a spectral component of the differential detent torque is, in the case of rotating synchronous motors (1), a Fourier component of the differential detent torque as a function of a rotor angle of a rotation of the rotor (7) in relation to the stator (5) and, in the case of linear synchronous motors (1), a Fourier component of the differential detent torque as a function of a rotor position of the rotor (7) in relation to the stator (5).

10. Method according to one of the preceding claims, wherein a compensation current is generated in each case for the compensation of a detent torque, which acts at a point in time shifted by a dead time after the generation of the compensation current, wherein the dead time is a period of time which elapses between the changing of a compensation current and the changing of the compensation torque brought about by the changing of the compensation current.

11. Compensation arrangement (3) for carrying out the method according to one of the preceding claims, the compensation arrangement (3) comprising

   - a measuring device (9) for acquiring the no-load detent torque and the load detent torques of the reference motor (2) as a function of the rotor position,
   - an evaluation unit (11) for establishing the differential detent torque, determining the operating-point-dependent spectral component of the differential detent torque and establishing the model function of the spectral component and
   - a control unit (13) for each synchronous motor (1) for regulating a motor current of the synchronous motor (1), wherein the control unit (13) is embodied, during operation of the synchronous motor (1) in the first operating range, at an instantaneous operating point, to superimpose a setpoint current of the synchronous motor (1) with a first compensation current, which generates a compensation torque which compensates for a detent torque with the value of the model function at the instantaneous operating point.

12. Compensation arrangement (3) according to claim 11, wherein the control unit (13) of each synchronous motor (1) is embodied to store a no-load detent torque acquired for the synchronous motor (1) as a function of the rotor position thereof and, during operation of the synchronous motor (1) in a predeterminable second operating range, to superimpose the setpoint current of the synchronous motor (1) with a second compensation current, which generates a compensation torque which compensates for the no-load detent torque of the synchronous motor (1).

**Revendications**

1. Procédé de compensation de couples d'enclenchement de moteurs (1) synchrones de même construction, qui ont chacun un stator (5) et un rotor (7), dans lequel

   - pour un moteur (2) de référence parmi les moteurs (1) synchrones, on relève un couple d'enclenchement en marche à vide dans une marche à vide en fonction d'une position du rotor (7) par rapport au stator (5) et pour divers points de travail respectivement un couple d'enclenchement en charge en fonction de la position du rotor,
   - on forme un couple d'enclenchement de différence pour chaque couple d'enclenchement de charge relevé du moteur (2) de référence, en soustrayant le couple d'enclenchement en marche à vide relevé du moteur (2) de référence du couple d'enclenchement en charge,
   - on détermine une composante spectrale du couple d'enclenchement de différence en fonction du point de travail,
   - on forme une fonction de modèle de la composante spectrale, par laquelle on modélise la composante spectrale en fonction du point de travail, et
   - pour chaque moteur (1) synchrone, lors du fonctionnement dans une première plage de fonctionnement pouvant être donnée à l'avance à un point de travail instantané, on superpose à un courant de consigne du moteur (1) synchrone un premier courant de compensation, qui produit un couple de compensation, qui compense un couple d'enclenchement par la valeur de la fonction de modèle au point de travail instantané.

2. Procédé suivant la revendication 1, dans lequel on définit un point de travail du moteur (1) synchrone par une valeur réelle d'un couple ($M_{Last}$) en charge.

3. Procédé suivant la revendication 1, dans lequel on définit un point de travail d'un moteur (1) synchrone par une valeur réelle d'un couple ($M_{Last}$) en charge et par au moins un autre paramètre.

4. Procédé suivant l'une des revendications précédentes, dans lequel la fonction de modèle modélise une amplitude ($A_{Diff}$) de la composante spectrale du couple d'enclenchement de différence par une fonction polynominale d'un couple ($M_{Last}$) en charge.

5. Procédé suivant l'une des revendications précédentes, dans lequel la fonction de modèle modélise une phase ($P_{Diff}$) de la composante spectrale du couple d'enclenchement de différence par une fonction linéaire par morceau d'un couple ($M_{Last}$) en charge.

6. Procédé suivant l'une des revendications précédentes, dans lequel on relève, pour chaque moteur (1) synchrone, dans une marche à vide, un couple d'enclenchement en marche à vide en fonction de la position du rotor et on superpose, dans le fonctionnement du moteur (1) synchrone dans une deuxième plage de fonctionnement pouvant être donnée à l'avance, au courant de consigne du moteur (1) synchrone un deuxième courant de compensation, qui produit un couple de compensation, qui compense le couple d'enclenchement en marche à vide du moteur (1) synchrone.

7. Procédé suivant la revendication 6, dans lequel la première plage de fonctionnement est contenue dans la deuxième plage de fonctionnement.

8. Procédé suivant l'une des revendications précédentes, dans lequel on définit une plage de fonctionnement d'un moteur (1) synchrone dans le cas de moteurs (1) synchrones tournants par un intervalle de vitesse de rotation des vitesses (u) de rotation du rotor et, dans le cas de moteurs (1) synchrones linéaires, par un intervalle de vitesse des vitesses du rotor.

9. Procédé suivant l'une des revendications précédentes, dans lequel une composante spectrale du couple d'enclenchement de différence est, dans le cas de moteurs (1) synchrones tournants, une composante de Fourier du couple d'enclenchement de différence comme fonction d'un angle du rotor d'une rotation du rotor (7) par rapport au stator (5), et dans le cas de moteurs (1) synchrones linéaires, une composante de Fourier du couple d'enclenchement de différence, comme fonction d'une position du rotor (7) par rapport au stator (5) .

10. Procédé suivant l'une des revendications précédentes, dans lequel on produit respectivement un courant de compensation pour la compensation d'un couple d'enclenchement, qui agit à un instant décalé d'un point mort après la production du courant de compensation, le temps mort étant un laps de temps, qui s'écoule entre la variation d'un courant de compensation et la variation du couple de compensation provoquée par la variation du courant de compensation.

11. Système (3) de compensation pour effectuer le procédé suivant l'une des revendications précédentes, le système (3) de compensation comprenant

    - un dispositif (9) de mesure pour relever le couple d'enclenchement en marche à vide et les couples d'enclenchement en charge du moteur (2) de référence en fonction de la position du rotor,
    - une unité (11) d'analyse pour former le couple d'enclenchement de différence, déterminer la composante spectrale en fonction du point de travail du couple d'enclenchement de différence et former la fonction de modèle de la composante spectrale et
    - pour chaque moteur (1) synchrone, une unité (13) de commande pour régler un courant du moteur (1) synchrone, dans lequel l'unité (13) de commande est constituée pour, lors du fonctionnement du moteur (1) synchrone dans la première plage de fonctionnement à un point de travail instantané, superposer à un courant de consigne du moteur (1) synchrone un premier courant de compensation, qui produit un couple de compensation, qui compense un couple d'enclenchement par la valeur de fonction de modèle au point de travail instantané.

12. Système (3) de compensation suivant la revendication 11, dans lequel l'unité (13) de commande de chaque moteur (1) synchrone est constituée pour mettre en mémoire un couple d'enclenchement en marche à vide relevé pour le moteur (1) synchrone en fonction de la position de son rotor et pour superposer, lors du fonctionnement du moteur (1) synchrone dans une deuxième plage de fonctionnement pouvant être donnée à l'avance, au courant de consigne du moteur (1) synchrone un deuxième courant de compensation, qui produit un couple de compensation, qui compense le couple d'enclenchement en marche à vide du moteur (1) synchrone.

## FIG 1

## FIG 2

FIG 3

FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010156332 A1
- US 2003181999 A1
- US 20110084636 A1
- JP 2010063343 A
- US 2013221887 A1